## Europäisches Patentamt

## European Patent Office

## Office européen des brevets

(19)

(11) Veröffentlichungsnummer : **0 454 659 B1**

(12)

# EUROPÄISCHE PATENTSCHRIFT

(45) Veröffentlichungstag der Patentschrift :
**18.05.94 Patentblatt 94/20**

(51) Int. Cl.⁵ : **B60C 11/00**

(21) Anmeldenummer : **91890065.5**

(22) Anmeldetag : **02.04.91**

(54) **Fahrzeugluftreifen.**

(30) Priorität : **25.04.90 AT 954/90**

(43) Veröffentlichungstag der Anmeldung :
**30.10.91 Patentblatt 91/44**

(45) Bekanntmachung des Hinweises auf die
Patenterteilung :
**18.05.94 Patentblatt 94/20**

(84) Benannte Vertragsstaaten :
**AT DE FR GB IT**

(56) Entgegenhaltungen :
**EP-A- 0 268 436**
**EP-A- 0 367 557**
**EP-A- 0 412 952**
**US-A- 1 956 011**
**PATENT ABSTRACTS OF JAPAN vol. 13, no.**
**76 (M-800)(3424) 21. Februar 1989**

(56) Entgegenhaltungen :
**& JP-A-63 275 407 (THE YOKOHAMA RUBBER**
**CO. LTD. ) 14. November 1988**
**PATENT ABSTRACTS OF JAPAN vol. 13, no.**
**143 (M-811)(3491) 7. April 1989 & JP-A-63 306**
**903 (BRIDGESTONE CORP. ) 14. Dezember**
**1988**

(73) Patentinhaber : **Semperit Reifen**
**Aktiengesellschaft**
**Wienersdorferstrasse 20-24**
**A-2514 Traiskirchen (AT)**

(72) Erfinder : **Lux, Friedrich, Dipl.-Ing.**
**Neunkirchner Strasse 24**
**A-2700 Wiener Neustadt (AT)**

(74) Vertreter : **Vinazzer, Edith et al**
**Semperit Reifen Aktiengesellschaft**
**Patentabteilung Wienersdorferstrasse 20-24**
**A-2514 Traiskirchen (AT)**

EP 0 454 659 B1

**Beschreibung**

Die Erfindung betrifft einen Fahrzeugluftreifen mit einem Laufflächenprofil, welches sich zumindest innerhalb eines Umfangsbereiches, beispielsweise innerhalb einer Blockreihe, aus einer Abfolge von gleichartigen Profilelementen bzw. Basispitches, die durch Quernuten mit unterschiedlichen Nutpitchlängen gegliedert sind, zusammensetzt, wobei die Anzahl unterschiedlicher Umfangslängen der Basispitches mindestens drei beträgt.

Ein derartiger Fahrzeugreifen, der den Oberbegriff des Anspruchs 1 bildet, ist beispielsweise aus dem Patent Abstract of Japan, Vol. 13, Nr. 76 (M-800) (3424) zu JP-A-63-275407 bekannt. Dabei ist das Laufflächenprofil in eine Anzahl von in Umfangsrichtung verlaufenden Blockreihen gegliedert, wobei innerhalb einer bestimmten Blockreihe Blockpitches und Nutpitches in unterschiedlichen Längen vorgesehen sind, die einander derart zugeordnet sind, daß einem Blockpitch mit einer bestimmten Länge jeweils ein ganz bestimmtes Nutpitch zugeordnet ist.

Es sind ferner bereits verschiedene Methoden vorgeschlagen worden, mit deren Hilfe das von Fahrzeugluftreifen während des Abrollens entstehende Profilgeräusch angenehmer gestaltet werden soll. So ist es insbesondere in letzter Zeit üblich geworden, die Methode der "Pitchlängenvariation" anzuwenden, wonach aufeinanderfolgenden, gleichartigen Profilelementen unterschiedliche Umfangslängen, auch Pitchlängen genannt, zugeordnet werden. Beispielsweise ist es üblich, drei oder fünf unterschiedliche Pitchlängen zu wählen, deren günstigste Aufeinanderfolge (Pitchfolge) über den Reifenumfang rechnerisch ermittelt wird. Zu diesem Thema existiert auch eine größere Anzahl von Patentliteratur und es wird in diesem Zusammenhang beispielsweise auf die US-PS 4,327,792 und die US-PS 4,598,748 verwiesen. Die bekannten Methoden gestatten es vor allem, die Amplitude der Grundwelle zu senken und die auftretenden Frequenzen auf ein breiteres Frequenzband zu verteilen. Diesen Optimierungsmethoden sind jedoch insbesondere dadurch Grenzen gesetzt, daß Pitches nicht in beliebiger Länge bzw. Kürze gewählt werden können, da selbstverständlich auch auf andere Profileigenschaften, wie Fahrverhalten, Aquaplaning-verhalten usw., bedacht genommen werden muß.

Die Erfindung hat sich nun die Aufgabe gestellt, die bekannten Methoden der Pitchlängenvariation weiterzuentwickeln, um das Profilgeräusch subjektiv und objektiv zu verringern.

Gelöst wird die gestellte Aufgabe erfindungsgemäß durch die Merkmale des Anspruchs 1.

Es hat sich herausgestellt, daß Laufflächenprofile mit nach der Erfindung gestalteten Pitchfolgen gegenüber der Verwendung von nach bekannten Methoden gestalteten Pitchfolgen ein merklich verringertes Abrollgeräusch aufweisen. Dabei kommt sicher insbesondere zum Tragen, daß durch die Berücksichtigung eines weiteren variierbaren Parameters, nämlich der Nutbreiten, eine zusätzliche Vergleichmäßigung in der Verteilung der Frequenzen im Frequenzspektrum des Abrollgeräusches erzielbar ist. Die nach der Erfindung vorgeschlagene Überlagerung der Basispitchfolge mit einer von dieser abweichenden Nutpitchfolge gestattet es, bei einer Anzahl von Frequenzen im Frequenzspektrum die zugehörigen Amplituden merklich zu verringern.

Besonders günstige Ausgestaltungen der Erfindung sind in den Unteransprüchen enthalten.

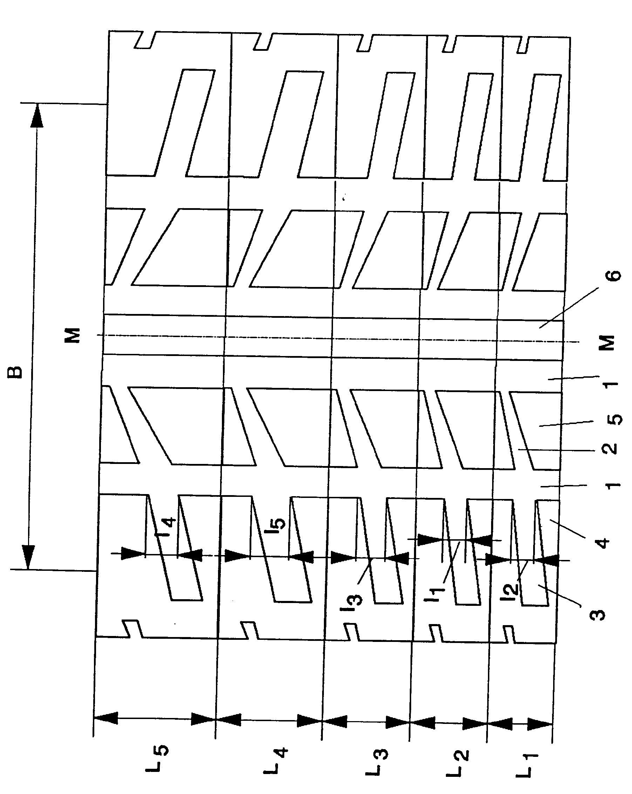

Weitere Merkmale, Vorteile und Einzelheiten der Erfindung werden nun anhand der Zeichnung, die ein Ausführungsbeispiel darstellt, näher beschrieben. Hiebei ist in der einzigen Zeichnungsfigur eine Draufsicht auf eine Teilabwicklung eines Laufflächenprofiles eines Fahrzeugluftreifens dargestellt.

Das schematisch dargestellte Laufflächenprofil setzt sich, wie es allgemein üblich ist, aus einer Vielzahl von in Umfangsrichtung aneinander gereihten gleichartigen Dessinzyklen, auch Pitches genannt, zusammen. Durch Umfangsnuten 1 und diese zumindest teilweise kreuzende Quernuten 2, 3 wird das Laufflächenprofil gegliedert, und zwar einerseits in ein in der Laufflächenmitte verlaufendes kontinuierliches Laufflächenband 6 und je zwei Blockreihen 4, 5. Die Breite des Laufflächenprofiles in der Bodenaufstandsfläche ist mit B bezeichnet.

Als Gesamtzahl der über den Reifenumfang vorgesehenen Pitches wird üblicherweise eine Zahl zwischen 40 und 78 gewählt. Dabei werden Pitches mit unterschiedlichen Umfangslängen verwendet, deren günstigste Anordnung bzw. Abfolge (Pitchfolge) über den Reifenumfang mittels dines Rechenprogrammes ermittelt wird.

Die im folgenden genauer erläuterte Erfindung ist auf solche Laufflächenprofil-Umfangsbereiche anwendbar, wo wiederholende Profilelemente und somit Quernuten zumindest teilweise verlaufen. Darunter kann nun das Profil über seine Gesamtbreite, eine oder beide Profilhälften oder ein schmälerer Umfangsbereich, beispielsweise eine Blockreihe, verstanden werden.

Nach der vorliegenden Erfindung setzt sich die Pitchfolge aus Basispitches mit mindestens drei unterschiedlichen Pitchlängen zusammen. Gemäß dem dargestellten Ausführungsbeispiel werden Basispitches mit fünf unterschiedlichen Pitchlängen $L_1$, $L_2$, $L_3$, $L_4$ und $L_5$ vorgesehen, wobei $L_1 < L_2 < L_3 < L_4 < L_5$. Das Verhältnis der Längen von kürzestem Pitch mit der Länge $L_1$ zum längsten Pitch mit der Länge $L_5$ wird zwischen 1:1,4 bis 1:1,6, insbesondere bei etwa 1:56, gewählt. Die Basispitches enthalten Nutpitches, wobei die Anzahl unterschiedlicher Nutpitchlängen mindestens 2 beträgt und höchstens der Anzahl unterschiedlicher Basispitchlängen entspricht, bevorzugt jedoch kleiner gewählt wird. Unter Nutpitchlängen werden hiebei unterschiedliche Quernutbreiten verstanden, die, wie die Zeichnungsfigur zeigt, an beliebigen, jedoch einander entsprechend zugeordneten Stellen am Reifenprofil zu ermitteln sind. Wie im Ausführungsbeispiel dargestellt, kommt es ja nicht auf die tatsächliche Quernutbreite an einer bestimmten Stelle an, sondern es spielt insbesondere das Verhältnis der einzelnen Breiten, hier Nutpitchlängen genannt, eine Rolle. Im vorliegenden Ausführungsbeispiel sind fünf unterschiedliche Nutpitchlängen $l_1, l_2, l_3, l_4, l_5$, vorgesehen, wobei $l_1 < l_2 < l_3 < l_4 < l_5$. Das Verhältnis der kürzesten Nutpitchlänge zur längsten Nutpitchlänge soll jedenfalls größer sein als das entsprechende Verhältnis der Basispitchlängen und zwischen 1:1,2 bis 1:1,55, bevorzugt zwischen 1:1,4 bis 1:1,5, betragen.

Die Zuordnung Nutpitches zu Basispitches erfolgt variabel. Beim geschilderten Ausführungsbeispiel kann demnach dem Basispitch mit der Länge $L_1$ jedes unterschiedlich lange Nutpitch zugeordnet werden. Bei fünf unterschiedlich langen Basispitches und fünf unterschiedlich langen Nutpitches können maximal fünfundzwanzig unterschiedliche Paarungen gebildet werden.

Im folgenden wird ein Beispiel einer variablen Zuordnung gegeben, wobei sich die Pitchfolge aus Basispitches mit fünf unterschiedlichen Basispitchlängen und drei unterschiedlichen Nutpitchlängen zusammensetzt:

$L_1, L_1, L_1, L_1, L_4, L_5, L_2, L_5, L_5, L_3, L_1, L_4, L_1,$
$l_1, l_2, l_1, l_3, l_2, l_2, l_1, l_2, l_3, l_3, l_1, l_1, l_1,$
$L_1, L_1, L_4, L_5, L_5, L_4, L_1, L_1, L_1, L_2, L_1, L_1, L_3,$
$l_2, l_2, l_3, l_1, l_3, l_1, l_1, l_2, l_1, l_2, l_1, l_1, l_1,$
$L_3, L_4, L_1, L_5, L_5, L_5, L_5, L_4, L_1, L_1, L_2, L_4, L_5,$
$l_2, l_3, l_1, l_3, l_1, l_3, l_2, l_3, l_1, l_1, l_1, l_2, l_3,$
$L_3, L_1, L_1, L_1, L_4, L_5, L_2, L_4, L_2, L_1, L_1, L_5, L_5,$
$l_2, l_1, l_2, l_1, l_1, l_3, l_3, l_2, l_1, l_2, l_1, l_3, l_2,$
$L_5, L_1, L_3, L_4, L_3, L_1, L_2, L_1, L_1, L_2, L_5, L_5, L_5,$
$l_2, l_1, l_2, l_2, l_3, l_1, l_2, l_1, l_3, l_2, l_3, l_1, l_3,$
$L_5, L_1, L_2$
$l_1, l_1, l_3$

Wird dabei dem kürzesten Basispitch mit der Länge $L_1$ und dem kürzesten Nutpitch mit der Länge $l_1$ die relative Länge 1 zugeordnet, so sind folgende Relativlängen für die weiteren Pitches in diesem Ausführungsbeispiel verwendet worden:

| | | | |
|---|---|---|---|
| $L_1$ | 1 | $l_1$ | 1 |
| $L_2$ | 1,1 | $l_2$ | 1,167 |
| $L_3$ | 1,21 | $l_3$ | 1,5 |
| $L_4$ | 1,36 | | |
| $L_5$ | 1,56 | | |

Dabei müssen in einer Pitchfolge nicht alle möglichen Paarungen auftreten. Bei einer Pitchfolge mit fünf unterschiedlichen Basispitchlängen $L_1$ bis $L_5$ könnte sich eine Zuordnung mit fünf unterschiedlichen Nutpitches der Länge $l_1$ bis $l_5$ wie folgt darstellen:

$L_1, L_1, L_1, L_1, L_4, L_5, L_2, L_5, L_5, L_3, L_1, L_4, L_1,$
$l_1, l_2, l_3, l_1, l_4, l_4, l_2, l_3, l_5, l_3, l_2, l_3, l_2,$
$L_1, L_1, L_4, L_5, L_5, L_4, L_1, L_1, L_1, L_2, L_1, L_1, L_3,$
$l_2, l_3, l_5, l_3, l_3, l_2, l_3, l_2, l_2, l_3, l_3, l_1, l_2,$
$L_3, L_4, L_1, L_5, L_5, L_5, L_5, L_4, L_1, L_1, L_2, L_4, L_5,$
$l_5, l_3, l_3, l_4, l_5, l_4, l_3, l_2, l_1, l_1, l_1, l_4, l_5,$
$L_3, L_1, L_1, L_1, L_4, L_5, L_2, L_4, L_2, L_1, L_1, L_5, L_5,$
$l_4, l_2, l_3, l_3, l_5, l_4, l_2, l_2, l_4, l_1, l_3, l_3, l_5,$
$L_5, L_1, L_3, L_4, L_3, L_1, L_2, L_1, L_1, L_2, L_5, L_5, L_5,$
$l_4, l_1, l_1, l_5, l_3, l_1, l_3, l_2, l_3, l_3, l_4, l_4, l_5,$
$L_5, L_1, L_2$
$l_5, l_1, l_4$

| Basispitches | Relativlänge | Nutpitches | Relativlänge |
|---|---|---|---|
| $L_1$ | 1 | $l_1$ | 1 |
| $L_2$ | 1,1 | $l_2$ | 1,08 |
| $L_3$ | 1,21 | $l_3$ | 1,17 |
| $L_4$ | 1,36 | $l_4$ | 1,2 |
| $L_5$ | 1,56 | $l_5$ | 1,5 |

Im folgenden wird beispielhaft erläutert, wie die beschriebene Zuordnung ermittelt werden kann. Hiebei soll die obige Pitchfolge mit fünf unterschiedlichen Basispitchlängen und fünf unterschiedlichen Nutpitchlängen, wobei die Gesamtanzahl der Pitches über den Reifenumfang 68 beträgt, betrachtet werden. Aus einer größeren Anzahl von rechnerisch ermittelten 68-Pitch-Folgen, wobei die Nutbreite konstant gehalten wurde, werden beispielsweise zehn ausgewählt und die möglichen Paarungen durchgerechnet. Darauf werden zweckmäßigerweise jene Kombinationen bzw. jene Kombination ausgewählt, wo sich rechnerisch bei den Amplituden der Ordnungs- und Frequenzanalysen Minima ergeben. Bei der Auswahl einer Kombination ist es günstig, auf weitere Profileigenschaften Rücksicht zu nehmen, beispielsweise auf die Strukturfestigkeit und das Fahrverhalten, so daß Kombinationen, bei denen Extrempaarungen, also kürzestes Basispitch mit längstem Nutpitch, vermehrt auftreten, eventuell ausgeschieden werden.

Im Rahmen der Erfindung können selbstverständlich auch Pitchfolgen verwendet werden, die sich aus der Aufeinanderfolge von mehr als fünf unterschiedlichen, miximal jedoch zwölf unterschiedlichen Basispitchlängen zusammensetzen.

## Patentansprüche

1. Fahrzeugluftreifen mit einem Laufflächenprofil, welches sich zumindest innerhalb eines Umfangsbereiches, beispielsweise innerhalb einer Blockreihe, aus einer Abfolge von gleichartigen Basispitches, die jeweils aus einem eine Quernut mitumfassenden Profilelement bestehen, zusammensetzt, wobei die Anzahl unterschiedlicher Umfangslängen der Basispitches mindestens drei beträgt und auch die Quernuten unterschiedliche Nutpitchlängen aufweisen, dadurch gekennzeichnet, daß die Basispitchfolge und die Nutpitchfolge voneinander verschiedene Pitchfolgen sind, so daß innerhalb eines Umfangsbereiches keine feste Zuordnung eines bestimmten Nutpitch zu einem bestimmten Basispitch erfolgt.

2. Fahrzeugluftreifen nach Anspruch 1, dadurch gekennzeichnet, daß die Anzahl unterschiedlicher Nutpitchlängen maximal der Anzahl unterschiedlicher Basispitchlängen entspricht und mindestens zwei beträgt.

3. Fahrzeugluftreifen nach Anspruch 1 oder 2, dadurch gekennzeichnet, daß das Verhältnis der Längen kürzestes Nutpitch zu längstem Nutpitch größer ist als das Verhältnis der Längen kürzestes Basispitch zu längstem Basispitch.

4. Fahrzeugluftreifen nach einem der Ansprüche 1 bis 3, dadurch gekennzeichnet, daß das Verhältnis der Längen kürzestes Nutpitch zu längstem Nutpitch in einem Bereich zwischen 1:1,2 bis 1:1,55, insbesondere zwischen 1:1,4 und 1:1,5 gewählt wird.

5. Fahrzeugluftreifen nach einem der Ansprüche 1 bis 3, dadurch gekennzeichnet, daß das Verhältnis der Längen kürzestes Basispitch zu längstem Basispitch in einem Bereich zwischen 1:1,4 bis 1:1,6, insbesondere 1:1,56, gewählt wird.

6. Fahrzeugluftreifen nach einem der Ansprüche 1 bis 5, dadurch gekennzeichnet, daß die Anzahl unterschiedlicher Nutpitchlängen und unterschiedlicher Basispitchlängen jeweils fünf beträgt.

**Claims**

1. Pneumatic vehicle tyre, having a tread surface profile which, at least internally of a circumferential region, for example internally of a row of blocks, comprises a series of similar base pitches, which each comprise a profile element including a transverse groove, the number of different circumferential lengths of the base pitch being at least three, and the transverse grooves also having different groove pitch lengths, characterised in that the base pitch sequence and the groove pitch sequence are pitch sequences which differ from one another, with the result that, internally of a circumferential region, there is no fixed association between one specific groove pitch and one specific base pitch.

2. Pneumatic vehicle tyre according to claim 1, characterised in that the maximum number of different groove pitch lengths corresponds to the number of different base pitch lengths and is at least two.

3. Pneumatic vehicle tyre according to claim 1 or 2, characterised in that the ratio of the lengths from the shortest groove pitch to the longest groove pitch is greater than the ratio of the lengths from the shortest base pitch to the longest base pitch.

4. Pneumatic vehicle tyre according to one of claims 1 to 3, characterised in that the ratio of the lengths from the shortest groove pitch to the longest groove pitch is selected to be within a range of between 1:1.2 and 1:1.55, more especially between 1:1.4 and 1:1.5.

5. Pneumatic vehicle tyre according to one of claims 1 to 3, characterised in that the ratio of the lengths from the shortest base pitch to the longest base pitch is selected to be within a range of between 1:1.4 and 1:1.6, more especially 1:1.56.

6. Pneumatic vehicle tyre according to one of claims 1 to 5, characterised in that the number of different groove pitch lengths and different base pitch lengths is five each.


**Revendications**

1. Bandage pneumatique de véhicule, muni d'un profil de surface de roulement se composant, au moins à l'intérieur d'une région périphérique, par exemple à l'intérieur d'une rangée de blocs, d'une succession de pas fondamentaux similaires qui consistent, respectivement, en un élément profilé comportant une gorge transversale, le nombre de longueurs périphériques différentes des pas fondamentaux étant d'au moins trois, et les gorges transversales présentant elles aussi des longueurs de pas différentes, caractérisé par le fait que la succession des pas fondamentaux et la succession des pas des gorges sont des successions de pas différant l'une de l'autre, de sorte qu'il n'existe, à l'intérieur d'une région périphérique, aucune assignation fixe d'un pas de gorge déterminé à un pas fondamental déterminé.

2. Bandage pneumatique de véhicule, selon la revendication 1, caractérisé par le fait que le nombre de longueurs de pas de gorges différentes correspond, au maximum, au nombre de longueurs de pas fondamentaux différentes, et est d'au moins deux.

3. Bandage pneumatique de véhicule, selon la revendication 1 ou 2, caractérisé par le fait que le rapport, existant entre les longueurs du pas de gorge le plus court et du pas de gorge le plus long, est supérieur au rapport existant entre les longueurs du pas fondamental le plus court et du pas fondamental le plus long.

4. Bandage pneumatique de véhicule, selon l'une des revendications 1 à 3, caractérisé par le fait que le rapport existant entre les longueurs du pas de gorge le plus court et du pas de gorge le plus long est choisi dans une plage comprise entre 1 : 1,2 et 1 : 1,55, notamment entre 1 : 1,4 et 1 : 1,5.

5. Bandage pneumatique de véhicule, selon l'une des revendications 1 à 3, caractérisé par le fait que le rapport existant entre les longueurs du pas fondamental le plus court et du pas fondamental le plus long est choisi dans une plage comprise entre 1 : 1,4 et 1 : 1,6, notamment 1 : 1,56.

6. Bandage pneumatique de véhicule, selon l'une des revendications 1 à 5, caractérisé par le fait que le nombre de longueurs de pas de gorges différentes et de longueurs de pas fondamentaux différentes est de cinq à chaque fois.